# EUROPEAN PATENT SPECIFICATION

(11) **EP 2 458 897 B1**
(45) Date of publication and mention of the grant of the patent: **09.09.2015**
(21) Application number: 10801880.5
(22) Date of filing: 14.05.2010
(51) Int. Cl.: H04W 4/00, H04Q 3/00, H04M 3/42, H04L 12/24

(54) **TRAFFIC CREATION SYSTEM AND METHOD FOR REALIZING THE TRAFFIC CREATION SYSTEM**
VERKEHRSHERSTELLUNGSSYSTEM UND VERFAHREN ZUR REALISIERUNG DES VERKEHRSHERSTELLUNGSSYSTEMS
SYSTÈME DE CRÉATION DE TRAFIC ET PROCÉDÉ DE RÉALISATION DU SYSTÈME DE CRÉATION DE TRAFIC

(30) Priority: 21.07.2009 CN 200910160088
(43) Date of publication of application: 30.05.2012
(73) Proprietor: ZTE Corporation, Shenzhen, Guangdong 518057 (CN)
(72) Inventor: WANG, Wei, Guangdong 518057 (CN)
(74) Representative: Hoyle, Benjamin James
(86) International application number: PCT/CN2010/072784
(87) International publication number: WO 2011/009320

(56) References cited:
- EP-A1- 1 978 677
- CN-A- 1 968 134
- CN-A- 1 968 315
- CN-A- 101 136 936
- US-A1- 2003 054 803
- US-A1- 2009 182 565

## Description

### Field of the Invention

The present invention relates to the communication field, and in particular to a service creation system and an implementing method thereof.

### Background of the Invention

With the continuous development of communication technologies, various value-added services emerge endlessly. With the emerging of a large number of information products, a series of value-added services arise as the times require, such as short message, multimedia message, streaming media, positioning, etc. These various value-added services on one hand enrich the use requirements of end users and on the other hand increase the income sources of the operators.

However, during the design and marketing process of traditional value-added services, they usually only focus on the promotion in relatively large user groups and this makes those small groups unable to choose freely according to their personal preferences.

The Service Creation Environment (abbreviated as SCE) is a value-added service rapid development tool commonly used by the service developers to help them to develop value-added services rapidly and conveniently. However, since the traditional SCE is oriented to those developers who have programming major background, the difficulty of developing value-added applications is relatively great. The period of development, deployment, and test is relatively long, and it is incapable of meeting people's various personalized demands of services.

It can be seen from the above description that: the current SCE has the following problems: (1) although the SCE abstracts a logic unit operated by it into a service independent building block (SIB) which shields the technical details of the underlying telecommunication network to a great extent, such abstraction is fine granularity abstraction, imposing relatively high requirements on the developers and rendering barriers for those who are not familiar with telecommunication; (2) those services developed using the SCE need to be deployed on the own application server of a service provider; (3) some already implemented application resources can not be used repeatedly; and (4) the SIB in the SCE is provided by the SCE itself, which is enclosed and not open. Therefore, it can be only possible to use the service developing ability of the telecommunication to develop services, which is incapable of combining other abilities, such as Internet ability and information contents.

Therefore, it is urgently needed to provide a combination service providing platform to solve personalized requirements and meet on the basis of personalized improvement the requirements which cannot be achieved by the original mode. US 2009/182565 and EP1978677 provide respective technical solutions; however, the above mentioned problem still remains unsolved.

### Summary of the Invention

The present invention is proposed in light of the problem that the service development flexibility of the current SCE is relatively poor. Therefore the main object of the present invention is to provide an improved service creation system and an implementing method thereof so as to solve the above problems.

A service creation system is provided according to one aspect of the present invention.

The service creation system according to the present invention comprises: a service creation module adapted to manage and provide service information and service state; a serving access module adapted to manage and provide the serving needed to consist the service; a service execution engine module adapted to, when executing the service, acquire corresponding service information and service state from the service creation module, and acquire corresponding serving information from the serving access module according to serving nodes involved in the acquired corresponding service information executing a service logic, and invoke a corresponding serving; and a service use management module adapted to manage the information of the user using the service and invoke the service execution engine module to execute a corresponding service according to service input parameters and a service execution plan indicated by the user.

Preferably, the system also comprises: an interface adaptation engine adapted to implement an interaction between the service creation system and one or more external systems other than the service creation system.

Preferably, the interface adaptation engine is also adapted to receive an uplink informing message from an integrated service access gateway in the situation that the external system is the integrated service access gateway.

Preferably, the interface adaptation engine is also adapted to synchronize the service information of an integrated service management system and the service creation system and information of the user using the service, in the situation that the external system is the integrated service management system.

Preferably, the system also comprises: a service creation portal adapted to provide information of the user using the service for a service use management module, provide service information and service state for a service management module, and provide serving for a serving management module according to a service procedure indicated by a user.

Preferably, the service creation portal comprises: a service procedure drafting tool for proving a graphical interface for the user so as to facilitate the user to draft the service procedure.

Preferably, the service creation module is also adapted to perform to the service information and service state at least one of the following operations: inquiry, creation, modification, deletion.

Preferably, the service use management module is also adapted to perform at least one of the following operations: inquiring the information of the user using the service, managing the user to start or stop the service, managing the service execution plan, and managing a service use call list.

Preferably, the serving access module is also adapted to perform to the serving at least one of the following operations: inquiry, registration, upgrading, and cancellation.

A method for implementing a service creation system is provided according to one aspect of the present invention.

The method for implementing a service creation system according to the present invention comprises: when executing a service, acquiring corresponding service information and service state; and acquiring serving nodes involved when executing a service logic according to the service information, acquiring corresponding serving information according to the serving nodes, and invoking a corresponding serving. wherein acquiring corresponding service information and service state comprises: acquiring respective service input parameters and service execution plan from information of the user using the service and acquiring corresponding service information and service state according to a service needing to be executed in the service execution plan.

Preferably, this method also comprises: setting the information of the user using the service, service information, service state and serving according to a service procedure indicated by the user.

Preferably, this method also comprises: providing a graphical interface for the user indicating the service procedure so as to facilitate the user to draft the service procedure.

Preferably, this method also comprises: performing to the service information and service state at least one of the following operations: inquiry, creation, modification, deletion.

Preferably, this method also comprises: inquiring the information of the user using the service, managing the user starting or stopping service, managing the service execution plan and/or managing a service use call list.

Preferably, this method also comprises: performing to the serving at least one of the following operations: inquiry, registration, upgrading, and cancellation.

By virtue of the present invention, the method of using a service execution engine module and a service creation module and serving access module associated with the service execution engine module to implement service process solves the problem that the service development flexibility of the current SCE is relatively poor, and thus improves the flexibility of service development.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a block diagram of the structure of a service creation system according to the embodiments of the present invention;
Fig. 2 is a first preferred block diagram of the structure of the service creation system according to the embodiments of the present invention;
Fig. 3 is a second preferred block diagram of the structure of the service creation system according to the embodiments of the present invention;
Fig. 4 is a flow chart of a method for implementing a service creation system according to the embodiments of the present invention; and
Fig. 5 is a detailed flow chart of implementing a service creation system according to the examples of the present invention.

### Detailed Description of Embodiments

Considering the problems that the service development flexibility of the current SCE is relatively poor and the personalization cannot be sufficiently met in the traditional value-added service, the embodiments of the present invention provide an improved service creation system and an implementing method thereof. The system comprises the structure in which a service execution engine module, a service creation module, a serving access module, etc are adapted to implement service process. By this system, the user is allowed to make individualized choices of a value-added service on a combination service providing platform, and this system improves the rapidness and flexibility of service development.

It needs to be noted that the embodiments of the present application and the features of the embodiments can be combined with each other in the situation of no conflict. The present invention will be described hereinafter in detail with reference to the drawings and in conjunction with the embodiments. Identical reference numbers are corresponding to identical system unit throughout in all the drawings.

### System Embodiments

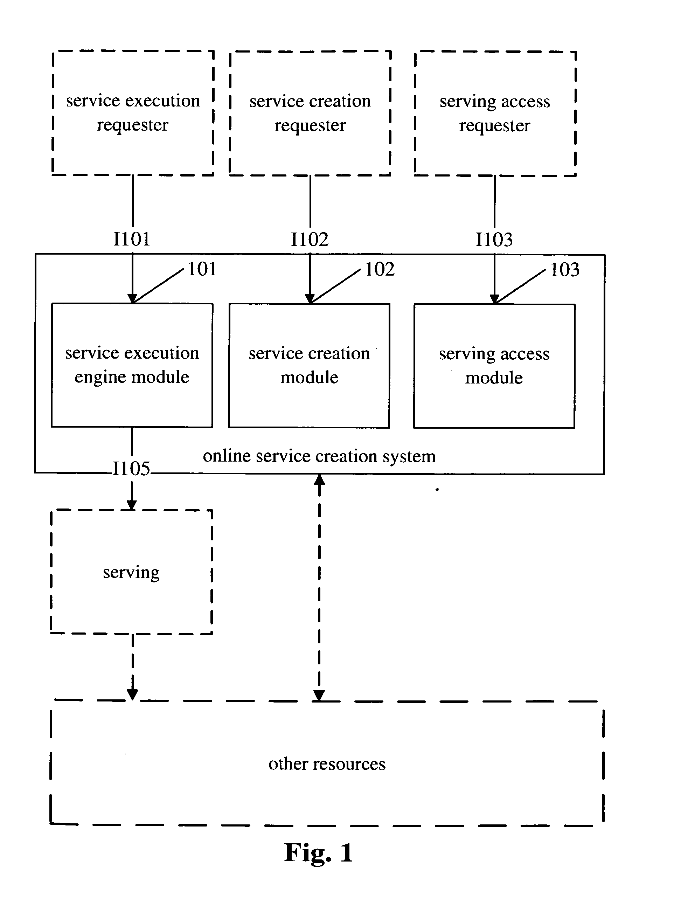

A service creation system (i.e. online service creation system) is provided according to the embodiments of the present invention. Fig. 1 is a block diagram of the structure of a service creation system according to the embodiments of the present invention. As shown in Fig. 1, this system comprises a service execution engine **101,** a service creation module **102** and a serving access module **103.** The above structure will be described hereinafter.

The serving access module **103** is adapted to manage and provide the serving needed to consist a service; the service creation module **102** is adapted to manage and provide service information and service state; the service execution engine **101,** connected to the service creation module **102** and the serving access module **103,** is adapted to acquire corresponding service information and service state from the service creation module **102,** acquire corresponding service information from the serving access module **103** according to serving nodes involved in the acquired corresponding service information executing a service logic, and invoke a corresponding serving.

Furthermore, the service execution engine **101** can have an interface **I101,** which is uniformly referred to as service execution interface **I101** hereinafter. Additionally, the service creation module **102** and the serving access module **103** can also be provided with interface **I102** and **I103** respectively. A service creation requester can communicate with the service creation module **102** via the interface **I102,** and a serving access requester can communicate with the serving access module **103** via the interface **I103.**

In the embodiment of the present invention, the service execution requester can start the service execution engine **101** via the interface **I101** and input a service execution parameter into the service execution engine **101.** Then, the service execution engine **101** executes corresponding service procedure and service logic according to the information carried in the input service execution parameter and invokes a corresponding serving via a specification interface **I105** when executing the service logic, which serving invokes other resources as required via an interface to implement the serving function. The above service execution parameters comprise but are not limited to service procedure identification and service procedure input parameter.

Parameters of a serving specification interface **I105** comprise the serving input parameter and the output parameter. The specification interface **I105** can be a Web Service interface, a REST interface, a program interface, etc.

Additionally, a management requester can start the above service creation module **102** and serving access module **103** by means of communication, and manage via these two modules the relevant information of various services and serving processed by the service execution engine **101.**

In particular, the service creation module **102** performs such operations as inquiry, creation, modification, deletion, etc. of the services via the service creation interface **I102.**

The service execution engine **101** invokes a corresponding serving via the specification interface **I105.** And the serving access module **103** manages the above serving via the serving access interface **I103,** which comprises the inquiry, registration, upgrading, cancellation, etc. of the serving.

### Embodiment I

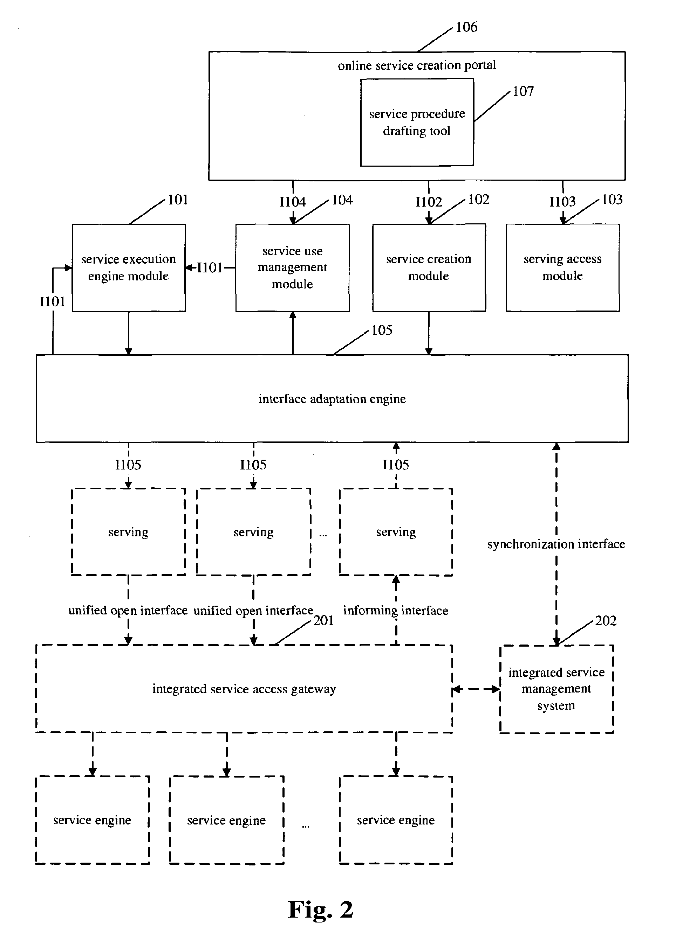

Fig. 2 is a first preferred block diagram of the structure of the service creation system according to the embodiments of the present invention. As shown in Fig. 2, this online service creation system further comprises the following modules besides the above service execution engine **101,** service creation module **102,** and serving access module **103.**

A service use management module **104** is adapted to manage the information of the user using the service and invoke the service execution interface **I101** provided by the service execution engine **101** to execute a corresponding service according to the service input parameter and service execution plan indicated by the user. Additionally, the service use management module **104** performs management on relevant information of user using service via the service management interface **I104,** which comprises operations such as inquiry of information of the user using the service, user starting or stopping service, service execution plan, service use call list, etc.

An interface adaptation engine **105** is adapted to implement the interaction of the service creation system and one or more external systems other than the service creation system. That is, the interface adaptation engine **105** is used for an outward interaction interface of the online service creation system.

Specifically, in order to perform integrated regulation and control on various service engines, an integrated service access gateway **201** is set. The interface adaptation engine **105** is further adapted to receive an uplink informing message from the integrated service access gateway **201** forwarded by the serving in the situation that the external system is an integrated service access gateway. And the uplink informing message of the integrated service access gateway **201** is sent to a corresponding serving via an informing interface, then the serving informs the interface adaptation engine **105** via the specification interface **I105** to match corresponding service procedure and input parameter, and thus invoke the service execution engine. Thus, the service execution engine **101** invokes a serving via the interface adaptation engine **105** when executing a service procedure, therefore shielding the difference of the serving interfaces. The invoked services are connected to the integrated service access gateway **201** via a unified open interface, and the integrated service access gateway **201** is connected to the service engine.

On the other hand, the service creation module **102** synchronizes service information with the integrated service management system **202** via the interface adaptation engine **105.** The interface adaptation engine **105** is further adapted to synchronize the service information and information of the user using the service of the integrated service management system **202** and the service creation system in the situation that the external system is the integrated service management system **202.** That is, the integrated service management system **202** synchronizes the information of the user using the service with the service use management module **104** by the interface adaptation engine **105** via the synchronization interface.

Preferably, the above service creation system further comprises: a service creation portal **106** adapted to provide information of the user using the service for the service use management module, provide service information and service state for the service creation module, and provide serving information for the serving access module, according to a service procedure indicated by a user.

In the process shown in Fig. 1, since the service creation module **102** and the serving access module **103** provide the interface service creation interface **I102** and the serving access interface **I103** used for a requester to perform direct operations to the above modules. However, in this embodiment, the above online service creation system, by using the online service creation portal **106** as a corresponding requester, performs service management and serving management, etc. on each management function in the above module blocks (i.e. the above service creation module **102** and serving access module **103)** via the above interfaces.

The online service creation portal **106** further comprises: a service procedure drafting tool **107** adapted to provide a graphical interface to a user to facilitate the user to draft the service procedure. The draft of service procedure can be performed by means of dragging and dropping. The service procedure can be consisted of a start node, a sub-service procedure, a serving node, an expression node, a timer node, a connection wire, etc. This drafting tool can set the attributes of these elements to draft the service procedure by dragging and dropping these types of procedure elements.

### Embodiment II

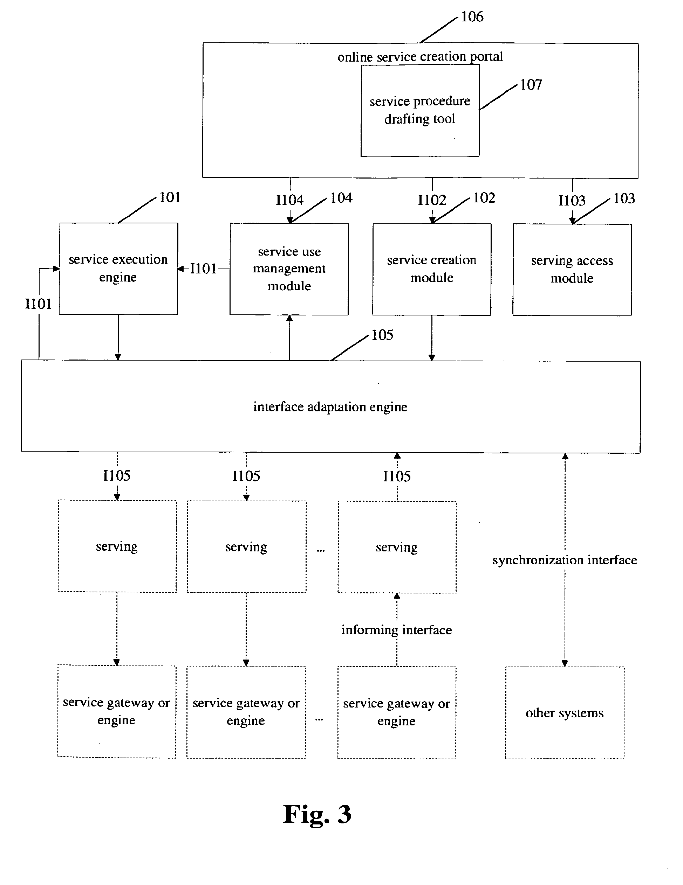

Fig. 3 is a second preferred block diagram of the structure of the service creation system according to the embodiments of the present invention. As shown in Fig. 3, the difference of this embodiment and embodiment I is that: in this embodiment, there is no integrated service access gateway and integrated service management system; but the serving communicates and interacts with each different service gateway or engine respectively, and the interface adaptation engine 105 communicates with other systems via a synchronization interface; therefore, the embodiment shown in Fig. 3 can be adaptive to the different outward system interactions.

### Method Embodiments

A method for implementing a service creation system is provided according to the embodiments of the present invention. This method comprises: when executing a service, acquiring corresponding service information and service state; and acquiring serving nodes involved in executing a service logic according to the service information, acquiring corresponding serving information according to the serving nodes, and invoking a corresponding serving. In particular, acquiring corresponding service information and service state comprises: acquiring a corresponding service input parameter and service execution plan from the information of the user using the service and acquiring corresponding service information and service state according to a service needed to be executed in the service execution plan.

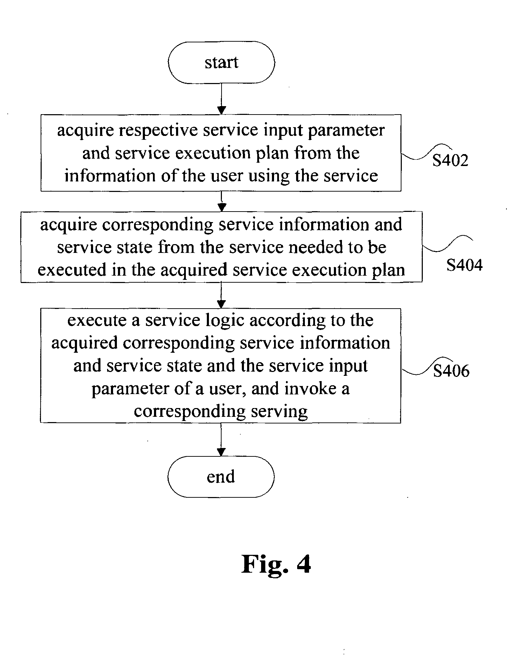

Fig. 4 is a flow chart of a method for implementing a service creation system according to the embodiments of the present invention. As shown in Fig. 4, this method in particular comprises the following steps 402 to 406:
Step 402: acquiring the respective service input parameter and service execution plan from the information of the user using the service;
Step 404: acquiring corresponding service information and service state according to the service needed to be executed in the acquired service execution plan; and
Step 406: executing a service logic according to the acquired corresponding service information and service state and the service input parameter of a user, and invoke a corresponding serving.

Furthermore, the above method also comprises: setting the information of the user using the service, service information, service state and serving according to the service procedure indicated by the user; and providing a graphical interface for the user indicating the service procedure, so as to facilitate the user to draft the service procedure.

Additionally, it can further execute the following operations: inquiring, creating, modifying, and deleting the service information and service state; inquiring, registering, upgrading, and cancelling the serving; and inquiring the information of the user using the service, managing the user to start or stop service, managing the service execution plan, and managing the service use call list.

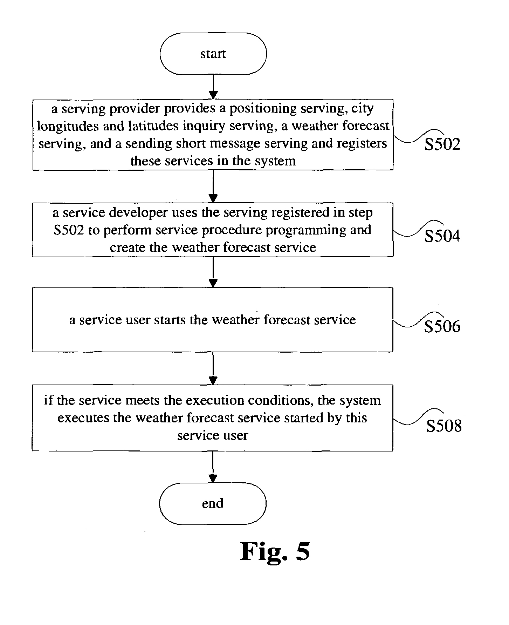

Fig. 5 is a detailed flow chart of a method for implementing a service creation system according to the embodiments of the present invention. As shown in Fig. 5, the procedure of developing and using the weather forecast service in the online service creation system comprises the following steps 502 to 508.
Step 502: A service provider provides a positioning serving, city longitudes and latitudes inquiry serving, a weather forecast serving, and a sending short message serving, and registers these services in the above online service creation system. The positioning serving is to obtain the current longitudes and latitudes of a user according to the user number; the city longitudes and latitudes inquiry serving is to obtain a corresponding city name according to the longitudes and latitudes; the weather forecast serving is to obtain the weather information according to the city name; and the sending short message serving is to send corresponding short message contents to a corresponding destination number in the form of short message according to the destination number and short message contents.
Step 504: A service developer uses the serving registered in step 502 to perform service procedure programming and creates the weather forecast service; the input parameter of the service comprises a destination number; and the procedure of the service is; first executing the positioning serving according to the destination number input by the service, then executing the city longitudes and latitudes inquiry serving according to the longitudes and latitudes output by the positioning serving, and then executing the weather forecast serving according to the city name output by the city longitudes and latitudes inquiry serving, and at last executing the sending short message serving according to the destination number input by the service and the weather information output by the weather forecast serving.
Step 506: A service user starts the weather forecast service. Since this service can set various services as the start node, such as a portal uplink serving used as the start node, a short message uplink serving used as the start node, etc., the service user can configure the input parameter of this service by various means and start this service. For example, by means of short message, a "destination number" is sent to a corresponding "service access code" and the input parameter of this service is configured and this service is started. Also, as shown in Fig. 2 or 3, this service user configures the input parameter and execution plan of this service via the online creation portal **106**, and then control the operation of the service use management module **104** via the online creation portal 106, thus configuring the input parameter of this service and starting this service as planned.
Step 508: If the service meets the execution conditions, the system executes via the service execution engine the weather forecast service started by this service user. The current longitudes and latitudes of the user are obtained according to a corresponding destination number, and then the corresponding city name is obtained according to the obtained longitudes and latitudes, then the weather information is obtained according to the city name, and then the obtained weather information is sent via short messages to the destination number set by the user, thus the corresponding destination number receives the weather forecast short message of the current city where the user is currently located.

It can be understood that the above procedure is only an exemplary process used by the system according to the present invention and each step of the individual processes can be swapped as required.

In summary, an improved service creation system and an implementing method thereof are provided by the above embodiments of the present invention. The system comprises the structure in which, a service execution engine, a service creation module, a serving access module, etc are adapted to implementing service process. It solves the problems that the flexibility of service development of the current SCE is relatively poor and the personalization cannot be sufficiently met in the traditional value-added service. And it makes user able to individually choose a value-added service on a combination service providing platform and is able to improve the rapidness and flexibility of service development.

Apparently, those skilled in the art should understand that each module or step in the above present invention can be implemented through general-purpose computing devices and they can be put together on single computing devices or distributed on a network consisted of a plurality of computing devices. Optionally, they can be implemented using computing device executable program code. Therefore, they can be executed by computing devices by storing them in a storage device, or they can be made into each integrated circuit module respectively or they can be implemented by making a plurality of module or steps of them into single integrated module respectively. Thus, the present invention is not limited to the combination of any specific hardware and software.

Above description is only to illustrate the preferred embodiments but not to limit the present invention. Various alterations and changes to the present invention are apparent to those skilled in the art. The scope defined in the present invention shall comprise any modification, equivalent substitution and improvement within the spirit and principle of the present invention.

## Claims

1. A service creation system, **characterized by** comprising:
a service creation module (102) adapted to manage and provide service information and service state;
a serving access module (103) adapted to manage and provide the serving needed to consist the service;
a service execution engine module (101) adapted to, when executing a service, acquire corresponding service information and service state from the service creation module (102), acquire corresponding serving information from the serving access module (103) according to serving nodes involved in the obtained corresponding service information executing a service logic, and invoke a corresponding serving; and
a service use management module (104) adapted to manage the information of the user using the service and invoke the service execution engine module (101) to execute a corresponding service according to service input parameters and a service execution plan indicated by the user.

2. The system according to Claim 1, **characterized in that** the system further comprises:
an interface adaptation engine (105) adapted to implement an interaction between the service creation system and one or more external systems other than the service creation system.

3. The system according to Claim 2, **characterized in that** the interface adaptation engine (105) is further adapted to receive an uplink informing message from an integrated service access gateway in the situation that the external system is the integrated service access gateway.

4. The system according to Claim 2, **characterized in that** the interface adaptation engine (105) is further adapted to synchronize service information of an integrated service management system and the service creation system and information of the user using the service, in the situation that the external system is the integrated service management system.

5. The system according to Claim 1, **characterized in that** the system further comprises:
a service creation portal (106) adapted to provide the information of a user using the service for the service use management module (104), provide the service information and the service state for the serving management module, and provide the serving for the serving management module, according to a service procedure indicated by the user.

6. The system according to Claim 5, **characterized in that** the service creation portal (106) comprises:
a service procedure drafting tool (107) adapted to provide a graphical interface for a user so as to facilitate the user to draft the service procedure.

7. The system according to any one of Claims 1 to 6, **characterized in that** the service creation module (102) is further adapted to perform to the service information and the service state at least one of the following operations: inquiry, creation, modification, and deletion.

8. The system according to Claim 1, **characterized in that** the service use management module (104) is further adapted to perform at least one of the following operations: inquiring the information of the user using the service, managing the user to start or stop the service, managing the service execution plan, and managing a service use call list.

9. The service creation system according to any one of Claims 1 to 6, **characterized in that** the serving access module (103) is further adapted to perform to the serving at least one of the following operations: inquiry, registration, upgrading, and cancellation.

10. A method for implementing a service creation system, **characterized by** comprising:
acquiring corresponding service information and service state when executing a service; and
acquiring serving nodes involved when executing a service logic according to the service information, and acquiring corresponding service information according to the serving nodes, and invoking a corresponding serving to consist the service;
wherein acquiring corresponding service information and service state comprises:
acquiring a corresponding service input parameter and service execution plan from information of the user using the service and acquiring the corresponding service information and the service state according to the service needed to be executed in the service execution plan.

11. The method according to Claim 10, **characterized in that** the method further comprises:
setting the information of the user using the service, the service information, the service state and the serving according to a service procedure indicated by a user.

12. The method according to Claim 11, **characterized in that** the method further comprises:
providing a graphical interface for the user indicating the service procedure, so as to facilitate the user to draft the service procedure.

13. The method according to any one of Claims 10 to 12, **characterized in that** the method further comprises at least one of the followings:
performing to the service information and the service state at least one of the following operations: inquiry, creation, modification, and deletion;
inquiring the information of the user using the service, managing the user to start or stop the service, managing the service execution plan, and/or managing a service use call list; and
performing to the serving at least one of the following operations: inquiry, registration, upgrading, and cancellation.

## Patentansprüche

1. Diensterstellungssystem, **dadurch gekennzeichnet, dass** das Diensterstellungssystem umfasst:
ein Diensterstellungsmodul (102), das eingerichtet ist, um Dienstinformationen und einen Dienstzustand zu verwalten und bereitzustellen;
ein Bedienungs-Zugangsmodul (103), das eingerichtet ist, um die Bedienung zu verwalten und bereitzustellen, die benötigt wird, um den Dienst zusammenzusetzen;
ein Dienstausführungs-Engine-Modul (101), das eingerichtet ist, entsprechende Dienstinformationen und einen entsprechenden Dienstzustand von dem Diensterstellungsmodul (102) zu erfassen, entsprechende Bedienungs-Informationen vom Bedienungs-Zugangsmodul (103) gemäß bedienender Knoten zu erfassen, die an den erlangten entsprechenden Dienstinformationen, die eine Dienstlogik ausführen, beteiligt sind, und eine entsprechende Bedienung zu aufzurufen, wenn ein Dienst ausgeführt wird; und
ein Dienstbenutzungsverwaltungsmodul (104), das eingerichtet ist, die Information des Nutzers, der den Dienst nutzt, zu verwalten und das Dienstausführung-Engine-Modul (101) aufzurufen, um einen entsprechenden Dienst gemäß Diensteingabeparametern und eines Dienstausführungsplans auszuführen, die durch den Nutzer angegeben wurden.

2. System nach Anspruch 1, **dadurch gekennzeichnet, dass** das System weiterhin umfasst:
eine Schnittstellenanpassungs-Engine (105), die eingerichtet ist, um eine Interaktion zwischen dem Diensterstellungssystem und einem oder mehreren externen Systemen umzusetzen, die nicht das Diensterstellungssystem sind.

3. System nach Anspruch 2, **dadurch gekennzeichnet, dass** die Schnittstellenanpassungs-Engine (105) weiterhin eingerichtet ist, um eine Uplink-Informierungs-Nachricht von einem integrierten Dienstzugangsgateway zu erhalten, wenn es sich bei dem externen System um einen integrierten Dienstzugangsgateway handelt.

4. System nach Anspruch 2, **dadurch gekennzeichnet, dass** die Schnittstellenanpassungs-Engine (105) weiterhin eingerichtet ist, um Dienstinformationen eines integrierten Dienstverwaltungssystems und des Diensterstellungssystem sowie Informationen des Nutzers, der den Dienst verwendet, zu synchronisieren, wenn es sich bei dem externen System um ein integriertes Dienstverwaltungssystem handelt.

5. System nach Anspruch 1, **dadurch gekennzeichnet, dass** das System weiterhin umfasst:
ein Diensterstellungsportal (106), das eingerichtet ist, um dem Dienstbenutzungsverwaltungsmodul (104) die Informationen eines Nutzers, der den Dienst nutzt, bereitzustellen, die Dienstinformationen und den Dienstzustand des Bedienungsverwaltungsmoduls bereitzustellen, und gemäß eines Dienstablaufs, der durch den Nutzer angegeben wurde, die Bedienung für das Bedienungsverwaltungsmodul bereitzustellen.

6. System nach Anspruch 5, **dadurch gekennzeichnet, dass** das Diensterstellungsportal (106) umfasst:
ein Dienstablaufentwurfswerkzeug (107), das eingerichtet ist, um eine grafische Schnittstelle für einen Nutzer bereitzustellen, um es dem Nutzer zu ermöglichen, den Dienstablauf zu entwerfen.

7. System nach einem der Ansprüche 1 - 6, **dadurch gekennzeichnet, dass** das Diensterstellungsmodul (102) weiterhin eingerichtet ist, um für die Dienstinformationen und den Dienstzustand zumindest einen der folgenden Abläufe durchzuführen: Abfrage, Erstellung, Abänderung, und Löschung.

8. System nach Anspruch 1, **dadurch gekennzeichnet, dass** das Dienstbenutzungsverwaltungsmodul (104) weiterhin eingerichtet ist, zumindest einen der folgenden Abläufe durchzuführen: Abfragen der Informationen des Nutzers, der den Dienst nutzt, Verwalten des Nutzers, den Dienst zu beginnen oder zu beenden, Verwalten des Dienstausführungsplans, und Verwalten einer Dienstbenutzungsanrufliste.

9. Diensterstellungssystem nach einem der Ansprüche 1 - 6, **dadurch gekennzeichnet, dass** das Bedienungszugangsmodul (103) weiterhin eingerichtet ist, zur Bedienung zumindest einen der folgenden Abläufe auszuführen: Abfrage, Registrierung, Nachrüsten, und Streichung.

10. Verfahren zum Umsetzen eines Diensterstellungssystems, **dadurch gekennzeichnet, dass** das Verfahren umfasst:
Erfassen entsprechender Dienstinformationen und eines Dienstzustandes, wenn ein Dienst ausgeführt wird; und
Erfassen von bedienen Knoten, welche beteiligt sind, wenn eine Dienstlogik entsprechend einer Dienstinformation ausgeführt wird, und Erfassen entsprechender Dienstinformationen gemäß der bedienenden Knoten, und Aufrufen einer entsprechenden Bedienung, um den Dienst zusammenzusetzen;
wobei das Erfassen der entsprechenden Dienstinformationen und des Dienstzustandes umfasst:
Erfassen eines entsprechenden Diensteingabeparameters und Dienstausführungsplans aus Informationen des Nutzers, der den Dienst nutzt, und Erfassen der entsprechenden Dienstinformationen und des Dienstzustandes gemäß des Dienstes, die benötigt werden, um in dem Dienstausführungsplan ausgeführt zu werden.

11. Verfahren nach Anspruch 10, **dadurch gekennzeichnet, dass** das Verfahren weiterhin umfasst:
Setzen der Informationen des Nutzers, der den Dienst nutzt, der Dienstinformationen, des Dienstzustands und der Bedienung gemäß eines Dienstablaufes, der durch den Nutzer angegeben wurde.

12. Verfahren nach Anspruch 11, **dadurch gekennzeichnet, dass** das Verfahren weiterhin umfasst:
Bereitstellen einer grafischen Schnittstelle für den Nutzer, der den Dienstablauf angibt, um es dem Nutzer zu ermöglichen, den Dienstablauf zu entwerfen.

13. Verfahren nach einem der Ansprüche 10 - 12, **dadurch gekennzeichnet, dass** das Verfahren weiterhin zumindest eines der Folgenden umfasst:
für die Dienstinformationen und den Dienstzustand zumindest einen der folgenden Abläufe: Abfrage, Erstellung, Abänderungen, und Löschung;
Abfragen der Informationen des Nutzers, der den Dienst nutzt, Verwalten des Nutzers, den Dienst zu beginnen oder zu beenden, Verwalten des Dienstausführungsplans, und Verwalten einer Dienstbenutzungsanrufliste;
Ausführen für die Bedienung zumindest eines der folgenden Abläufe: Abfrage, Registrierung, Nachrüsten, und Streichung.

## Revendications

1. Système de création de service, **caractérisé en ce qu'**il comprend :
un module de création de service (102) adapté pour gérer et fournir de l'information de service et un état du service ;
un module d'accès au service (103) adapté pour gérer et fournir le service nécessaire à la composition du service ;
un module de moteur d'exécution de service (101) adapté pour, lors de l'exécution d'un service, acquérir de l'information de service correspondante et un état du service de la part du module de création de service (102), acquérir de l'information de service correspondante de la part du module d'accès au service (103) en fonction de noeuds de service concernés par l'information de service correspondante obtenue en exécutant une logique de service, et faire appel à un service correspondant ; et
un module de gestion d'utilisation de service (104) adapté pour gérer l'information de l'utilisateur utilisant le service et faire appel au module de moteur d'exécution de service (101) pour exécuter un service correspondant en fonction de paramètres d'entrée du service et d'un plan d'exécution de service indiqués par l'utilisateur.

2. Système selon la revendication 1, **caractérisé en ce que** le système comprend en outre :
un moteur d'adaptation d'interface (105) adapté pour implémenter une interaction entre le système de création de service et un ou plusieurs systèmes externes différents du système de création de service.

3. Système selon la revendication 2, **caractérisé en ce que** le moteur d'adaptation d'interface (105) est en outre adapté pour recevoir un message d'information de liaison montante de la part d'une passerelle d'accès au service intégré dans le cas où le système externe est la passerelle d'accès au service intégré.

4. Système selon la revendication 2, **caractérisé en ce que** le moteur d'adaptation d'interface (105) est en outre adapté pour synchroniser l'information de service d'un système de gestion de service intégré et du système de création de service et l'information de l'utilisateur utilisant le service dans le cas où le système externe est le système de gestion de service intégré.

5. Système selon la revendication 1, **caractérisé en ce que** le système comprend en outre :
un portail de création de service (106) adapté pour fournir l'information d'un utilisateur utilisant le service pour le module de gestion d'utilisation de service (104), fournir l'information de service et l'état du service pour le module de gestion de service, et fournir le service pour le module de gestion de service en fonction d'une procédure de service indiquée par l'utilisateur.

6. Système selon la revendication 5, **caractérisé en ce que** le portail de création de service (106) comprend :
un outil d'esquisse de procédure de service (107) adapté pour fournir une interface graphique pour un utilisateur de manière à aider l'utilisateur à esquisser la procédure de service.

7. Système selon l'une quelconque des revendications 1 à 6, **caractérisé en ce que** le module de création de service (102) est en outre adapté pour effectuer, pour l'information de service et l'état du service, au moins l'une des opérations suivantes : une interrogation, une création, une modification et une suppression.

8. Système selon la revendication 1, **caractérisé en ce que** le module de gestion d'utilisation de service (104) est en outre adapté pour effectuer au moins l'une des opérations suivantes : interroger l'information de l'utilisateur utilisant le service, gérer l'utilisateur pour démarrer ou interrompre le service, gérer le plan d'exécution de service et gérer une liste d'appels d'utilisation de service.

9. Système de création de service selon l'une quelconque des revendications 1 à 6, **caractérisé en ce que** le module d'accès au service (103) est en outre adapté pour effectuer, pour le service, au moins l'une des opérations suivantes : une interrogation, un enregistrement, une mise à jour et une annulation.

10. Procédé pour implémenter un système de création de service, **caractérisé en ce qu'**il comprend :
l'acquisition d'une information de service correspondante et d'un état du service lors de l'exécution d'un service ; et
l'acquisition de noeuds de service concernés lors de l'exécution d'une logique de service en fonction de l'information de service, et l'acquisition d'une information de service correspondante en fonction des noeud de service, et le recours à un service correspondant pour la composition du service ;
dans lequel l'acquisition de l'information de service correspondante et de l'état du service comprend :
l'acquisition d'un paramètre d'entrée d'un service correspondant et d'un plan d'exécution de service à partir de l'information de l'utilisateur utilisant le service et l'acquisition de l'information de service correspondante et de l'état du service en fonction du service devant être exécuté dans le plan d'exécution de service.

11. Procédé selon la revendication 10, **caractérisé en ce que** le procédé comprend en outre :
l'établissement de l'information de l'utilisateur utilisant le service, de l'information de service, de l'état du service et du service en fonction d'une procédure de service indiquée par un utilisateur.

12. Procédé selon la revendication 11, **caractérisé en ce que** le procédé comprend en outre :
la fourniture d'une interface graphique pour l'utilisateur indiquant la procédure de service de manière à aider l'utilisateur à esquisser la procédure de service.

13. Procédé selon l'une quelconque des revendications 10 à 12, **caractérisé en ce que** le procédé comprend en outre au moins l'une des suivantes :
la réalisation, pour l'information de service et l'état du service, d'au moins l'une des opérations suivantes : une interrogation, une création, une modification et une suppression ;
l'interrogation de l'information de l'utilisateur utilisant le service, la gestion de l'utilisateur pour démarrer ou interrompre le service, la gestion du plan d'exécution du service et/ou la gestion d'une liste d'appels d'utilisation de service ; et
la réalisation, pour le service, d'au moins l'une des opérations suivantes : une interrogation, un enregistrement, une mise à jour et une annulation.
